(19) Europäisches Patentamt
European Patent Office
Office européen des brevets

(11) **EP 4 741 776 A1**

(12) **EUROPÄISCHE PATENTANMELDUNG**

(43) Veröffentlichungstag:
**13.05.2026 Patentblatt 2026/20**

(21) Anmeldenummer: **25212748.5**

(22) Anmeldetag: **31.10.2025**

(51) Internationale Patentklassifikation (IPC):
**G01F 1/66** *(2022.01)* **G01F 1/667** *(2022.01)*

(52) Gemeinsame Patentklassifikation (CPC):
**G01F 1/668; G01F 1/662**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **06.11.2024 DE 102024132291**

(71) Anmelder: **Krohne AG**
**4019 Basel (CH)**

(72) Erfinder:
• **Schipper, Willemijn**
**3353VA Papendrecht (NL)**
• **van Dijk, Eugene**
**3207DE Spijkenisse (NL)**

(74) Vertreter: **Gesthuysen Patentanwälte**
**Partnerschaftsgesellschaft mbB**
**Huyssenallee 68**
**45128 Essen (DE)**

(54) **VERFAHREN ZUM BETREIBEN EINES ULTRASCHALLDURCHFLUSSMESSGERÄTS UND ULTRASCHALLDURCHFLUSSMESSGERÄTS**

(57) Dargestellt und beschrieben ist ein Verfahren (1) zum Betreiben eines Ultraschalldurchflussmessgeräts (2) zur Messung des Durchflusses durch ein von einem Medium (3) durchströmtes Messrohr (4), wobei das Ultraschalldurchflussmessgerät (2) wenigstens einen sendenden Ultraschallwandler (5) zum Senden von Ultraschallsignalen (6) und wenigstens einen empfangenden Ultraschallwandler (7) zum Empfangen von Ultraschallsignalen (6) und eine Steuer- und Auswerteeinheit (8) umfasst, wobei die Steuer- und Auswerteeinheit (8) den sendenden Ultraschallwandler (5) so ansteuert, dass dieser das Ultraschallsignal (6) emittiert, der empfangende Ultraschallwandler (7) das emittierte Ultraschallsignal (6) empfängt und die Steuer- und Auswerteeinheit (8) durch Auswertung emittierter und empfangener Ultraschallsignale (6) zumindest einen mittelbaren Wert für den Durchfluss des Mediums (3) durch das Messrohr (4) ermittelt.

Eine gleichbleibende Messgüte wird dadurch erzielt, dass die Steuer- und Auswerteeinheit (8) eine Ultraschallsignal-Frequenz (f) des emittierten Ultraschallsignals (6) so anpasst, dass eine durch eine Änderung des Wertes der Schallgeschwindigkeit (v_sos) des Mediums (3) bewirkte Änderung eines Öffnungswinkels (phi) der Schallkeule (10) des Ultraschallsignals (6) zumindest teilweise kompensiert wird.

Fig. 3

EP 4 741 776 A1

**Beschreibung**

Die Erfindung betrifft Verfahren zum Betreiben eines Ultraschalldurchflussmessgeräts zur Messung des Durchflusses durch ein von einem Medium durchströmtes Messrohr, wobei das Ultraschalldurchflussmessgerät wenigstens einen sendenden Ultraschallwandler zum Senden von Ultraschallsignalen und wenigstens einen empfangenden Ultraschallwandler zum Empfangen von Ultraschallsignalen und eine Steuer- und Auswerteeinheit umfasst, wobei die Ultraschallwandler so angeordnet sind, dass sie in dem Medium einen Ultraschallmesspfad realisieren, und wobei die Steuer- und Auswerteeinheit den sendenden Ultraschallwandler so ansteuert, dass dieser ein Ultraschallsignal emittiert, der empfangende Ultraschallwandler das emittierte Ultraschallsignal empfängt und die Steuer- und Auswerteeinheit durch Auswertung emittierter Ultraschallsignale und empfangener Ultraschallsignale zumindest einen mittelbaren Wert für den Durchfluss des Mediums durch das Messrohr ermittelt. Darüber hinaus betrifft die Erfindung auch ein solches Ultraschalldurchflussmessgerät.

Die Durchflussmessung unter Verwendung von Ultraschallwellen ist seit Jahrzehnten bekannt. Unabhängig davon, welches Messverfahren genau zur Anwendung kommt (zum Beispiel Laufzeitmessung, Laufzeitdifferenzmessung (mit der Strömungsrichtung und entgegen der Strömungsrichtung), Frequenzmessung/Dopplereffekt), beruht die Durchflussmessung doch immer auf der Mitnahme von Ultraschallwellen in dem durch das Messrohr strömenden Medium, dessen Strömungsgeschwindigkeit erfasst werden soll.

Bei der überwiegenden Anzahl von Ultraschalldurchflussmessgeräten sind die charakteristischen Abmessungen des Messrohrs (bei den üblichen runden Messrohren der Messrohrdurchmesser) deutlich größer als die Wellenlänge des für die Messung verwendeten Ultraschallsignals, sodass die sich im Medium ausbreitenden Ultraschallwellen als Freiraumwellen aufgefasst werden können. Es ist bekannt, durch verschiedene Maßnahmen, beispielsweise durch eine bestimmte Auslegung der Ultraschallwandlergeometrie, auf die Form der emittierten Ultraschallsignale Einfluss zu nehmen. In diesem Zusammenhang wird häufig von dem Öffnungswinkel einer Ultraschallkeule des emittierten Ultraschallsignals gesprochen. Wenn in einer Hauptabstrahlrichtung des sendenden Ultraschallwandlers der maximale Schalldruck vorliegt, dann wird ermittelt, bei welchem Winkel abweichend von der Hauptabstrahlrichtung beispielsweise nur noch der halbe Schalldruck vorliegt. Dieser Winkel wird dann als Öffnungswinkel der Schallkeule aufgefasst, wenngleich bei darüber hinausgehenden Öffnungswinkeln natürlich auch noch ein Schalldruck festzustellen ist. Jedenfalls ist der Öffnungswinkel der Schallkeule des Ultraschallsignals ein geeignetes Maß für die Fokussiertheit des Ultraschallsignals.

Ein kleiner Öffnungswinkel der Schallkeule des Ultraschallsignals ist vorteilhaft hinsichtlich der Erzielung eines guten Signal-/Rauschverhältnisses. Bei Ultraschalldurchflussmessgeräten mit mehreren realisierten Messpfaden mit mehreren Ultraschallwandlerpaaren können mit kleinen Öffnungswinkeln der Schallkeulen der Ultraschallsignale gegenseitige Störungen der Ultraschallwandler vermieden oder jedenfalls reduziert werden. Wenn Einbausituationen vorliegen, bei denen in den von dem Messpfad durchkreuzten Messraum Einbauten hineinragen (andere Sensoren, Rührwerke etc.) dann werden durch kleine Öffnungswinkel ebenfalls störende Reflexionen vermieden oder reduziert. Auf der anderen Seite muss die Schallkeule einen hinreichend großen Öffnungswinkel haben, damit das Ultraschallsignal auch einen hinreichend großen Empfangsbereich zuverlässig abdeckt.

Aufgabe der vorliegenden Erfindung ist es, das Verfahren zum Betrieb des Ultraschalldurchflussmessgeräts und das entsprechende Ultraschalldurchflussmessgerät so weiterzubilden, dass auch bei stark veränderlichen Messsituationen eine gleichbleibende Messqualität gewährleistet ist.

Die hergeleitete Aufgabe ist bei dem eingangs beschriebenen Verfahren zum Betrieb eines Ultraschalldurchflussmessgeräts zunächst dadurch gelöst, dass die Steuer- und Auswerteeinheit den emittierenden Ultraschallwandler so ansteuert, dass das emittierte Ultraschallsignal mit einer definierten Ultraschallsignal-Frequenz emittiert wird, sodass bei einem definierten Wert der Schallgeschwindigkeit des in dem Messrohr strömenden Mediums das Ultraschallsignal mit einem definierten Öffnungswinkel einer Schallkeule des Ultraschallsignals emittiert wird.

Diese definierten Bedingungen und Einstellungen des Ultraschalldurchflussmessgeräts entsprechen oft den der Spezifikation des Ultraschalldurchflussmessgeräts zugrunde liegenden Bedingungen und Angaben bei einem bestimmten Medium, beispielsweise Wasser. Bei vielen Prozessen, in denen Ultraschalldurchflussmessgeräte eingesetzt werden, liegen wenig variierende Prozessbedingungen vor.

Der vorliegenden Erfindung liegen Beobachtungen zugrunde, die im Zusammenhang mit gasförmigen Medien gemacht worden sind, deren Zusammensetzung Veränderungen unterworfen ist, was erhebliche Auswirkungen auf das Ultraschallsignal, insbesondere auf den Öffnungswinkel der Schallkeule des emittierten Ultraschallsignals und damit auf die Messung haben kann. Gerade bei der Arbeit mit leichten Gasen (zum Beispiel Wasserstoff) können bei Wechsel des Gases (zum Beispiel zu Erdgas) oder der Gaszusammensetzung erhebliche Unterschiede bei der Ausbreitung von Schallwellen auftreten. Dies ist darin begründet, dass sich die Schallgeschwindigkeit in einem gasförmigen Medium umgekehrt proportional zur Quadratwurzel aus der molaren Masse seiner Moleküle verhält. So hat zum Beispiel Stickstoff bei 0 °C und bei Normaldruck eine Schallgeschwindigkeit von etwa 337 m/s, während Wasserstoff unter gleichen Bedingungen eine Schallgeschwindigkeit von etwa 1261 m/s aufweist.

Während die Änderung der Schallgeschwindigkeit bei der üblichen Laufzeitdifferenzmessung praktisch keinen Einfluss auf die Ermittlung der Strömungsgeschwindigkeit des Mediums und damit auf den Durchflussmesswert hat, ist erkannt worden, dass deutliche Änderungen in der Schallgeschwindigkeit erhebliche Auswirkungen auf den Öffnungswinkel der Schallkeule des bei der definierten Ultraschallsignal-Frequenz angeregten Ultraschallsignals haben. Eine solche Änderung des Öffnungswinkels der Schallkeule kann die Messqualität empfindlich einschränken und ist daher unerwünscht.

Im Zusammenhang mit der Erfindung ist aber ferner erkannt worden, dass sich der Öffnungswinkel der Schallkeule des emittierten Ultraschallsignals auch beeinflussen lässt durch Veränderung der Ultraschallsignal-Frequenz. Erfindungsgemäß ist daher vorgesehen, dass die Steuer- und Auswerteeinheit einen aktuellen Wert für die Schallgeschwindigkeit des in dem Messrohr strömenden Mediums erhält, dass die Steuer- und Auswerteeinheit bei einer Änderung des erhaltenen aktuellen Wertes der Schallgeschwindigkeit gegenüber dem definierten Wert der Schallgeschwindigkeit des Mediums die Ultraschallsignal-Frequenz des emittierten Ultraschallsignals auf einen aktuellen Wert der Ultraschallsignal-Frequenz ändert, sodass eine durch die Änderung des Wertes der Schallgeschwindigkeit des Mediums bewirkte Änderung des Öffnungswinkels der Schallkeule des Ultraschallsignals zumindest teilweise kompensiert wird. Durch die beschriebene Maßnahme kann einer ungewünschten Änderung des Öffnungswinkels der Schallkeule des Ultraschallsignals entgegengewirkt werden, sodass die gewünschte Messgüte erhalten werden kann.

Bei einer vorteilhaften Ausgestaltung des Verfahrens wird die Ultraschallsignal-Frequenz des emittierten Ultraschallsignals so geändert, dass der Öffnungswinkel der Schallkeule des emittierten Ultraschallsignals in einem Toleranzbereich um einen nominellen Öffnungswinkel bleibt. Hier wird berücksichtigt, dass es oft nicht auf eine exakte Einstellung des Öffnungswinkels der Schallkeule des Ultraschallsignals ankommt, sondern gewisse Abweichungen akzeptabel sind.

Bei einer Weiterbildung des Verfahrens ist vorgesehen, dass die Ultraschallsignal-Frequenz sprunghaft auf den geänderten aktuellen Wert der Ultraschallsignal-Frequenz geändert wird, insbesondere wobei durch die Änderung auf den geänderten Wert der Ultraschallsignal-Frequenz von einer Toleranzgrenze des Toleranzbereichs zur anderen Toleranzgrenze des Toleranzbereichs gesprungen wird. Bei dieser Weiterbildung des Verfahrens führt nicht jede Änderung der Schallgeschwindigkeit des Mediums auch zu einer Änderung der emittierten Ultraschallsignal-Frequenz, vielmehr wird mit einer Änderung der Anregungsfrequenz bis zum Überschreiten eines Toleranzbereichs abgewartet. Dies ist zum Beispiel dann sinnvoll, wenn der sendende Ultraschallwandler nur mit wenigen unterschiedlichen Frequenzen betrieben werden soll, beispielsweise weil nur bei diesen bestimmten Frequenzen eine vorteilhafte Anregung möglich ist (Resonanzen, Ausnutzung radialer und axialer Anregungsmodi).

Eine alternative Ausgestaltung des Verfahrens sieht vor, dass die Ultraschallsignal-Frequenz kontinuierlich auf den geänderten aktuellen Wert der Ultraschallsignal-Frequenz geändert wird. Die bietet sich insbesondere dann an, wenn der aktuelle Wert für die Schallgeschwindigkeit des Mediums häufig aktualisiert wird bzw. häufig aktuell zur Verfügung gestellt wird und eine feinstufige Änderung der Ultraschallsignal-Frequenz unproblematisch ist.

Eine Verfahrensvariante ist dadurch gekennzeichnet, dass die Ultraschallsignal-Frequenz des emittierten Ultraschallsignals erst geändert wird, wenn die Änderung der erhaltenen aktuellen Schallgeschwindigkeit gegenüber der bekannten Schallgeschwindigkeit des Mediums einen vorgegebenen Änderungsschwellwert übersteigt. Da sich der Öffnungswinkel der Schallkeule des Ultraschallsignals in Abhängigkeit von der Schallgeschwindigkeit im Medium ändert, kann auch die Änderung der Schallgeschwindigkeit direkt herangezogen werden, um die Ultraschallsignal-Frequenz entsprechend anzupassen.

Bei einer vorteilhaften Ausgestaltung des Verfahrens wird der aktuelle Wert für die Schallgeschwindigkeit des in dem Messrohr strömenden Mediums von der Steuer- und Auswerteeinheit selbst berechnet auf Basis einer Laufzeitmessung des emittierten Ultraschall-Signals und einer bekannten Lauflänge des emittierten Ultraschall-Signals. Dies ist insbesondere dann auf einfache Weise möglich, wenn das Ultraschalldurchflussmessgerät zur Durchführung einer Laufzeitdifferenzmessung eingerichtet ist, bei der Messungen der Signallaufzeiten mit und entgegen der Strömungsrichtung durchgeführt werden, da die Strömungsgeschwindigkeit des Mediums sich bei geeigneter Summation der Laufzeiten bei der Berechnung automatisch heraushebt.

Bei einer alternativen Ausgestaltung des Verfahrens wird der aktuelle Wert für die Schallgeschwindigkeit des in dem Messrohr strömenden Mediums vorgegeben, insbesondere durch eine externe Parametereingabe. Der aktuelle Wert für die Schallgeschwindigkeit kann beispielsweise durch einen externen Messvorgang bestimmt werden, wobei der ermittelte Wert von einem Leitrechner entsprechend an erfindungsgemäß arbeitende Ultraschalldurchflussmessgeräte verteilt wird.

Bei einer vorteilhaften Ausgestaltung des Verfahrens wird die erforderliche Änderung des Wertes der Ultraschallsignal-Frequenz auf den aktuellen Wert der Ultraschallsignal-Frequenz zur Kompensierung des Einflusses der Änderung der Schallgeschwindigkeit in dem Medium auf den Öffnungswinkel der Schallkeule des Ultraschallsignals auf Grundlage eines physikalisch-mathematischen Modells der Wellenausbreitung berechnet. Insbesondere wird eine Gleichung zur Beschreibung des Schalldrucks in Abhängigkeit von einem Polwinkel zu einer Hauptabstrahlrichtung des sendenden Ultraschallwandlers verwendet. Ganz allgemein wird eine Wellengleichung für Schallwellen gelöst, die die geometrischen und physikalischen Randbedingungen (Ultraschallwandler, Medium) berücksichtigt. Aus dem physikalisch-mathematischen Modell wird analytisch oder numerisch die Abhängigkeit des Öffnungswinkels der Schallkeule des Ultraschallsignals von der Schallgeschwindigkeit des Mediums und der Ultraschallsignal-Frequenz des angeregten Ultraschallsignals ermittelt. Aus der Abhängigkeit zwischen Öffnungswinkel, Schallgeschwindigkeit und Ultraschallsignal-Frequenz wird die erforderliche Änderung der Ultraschallsignal-Frequenz ermittelt zur zumindest teilweisen Kompensation des Einflusses der geänderten Schallgeschwindigkeit auf den Öffnungswinkel des Ultraschallsignals.

Die hergeleitete Aufgabe wird ebenfalls gelöst mit dem zuvor beschriebenen Ultraschalldurchflussmessgerät, wobei die die Steuer- und Auswerteeinheit im Betrieb des Ultraschalldurchflussmessgeräts das zuvor ausführlich beschriebene Verfahren durchführt.

Im Einzelnen gibt es nun eine Vielzahl von Möglichkeiten, das erfindungsgemäße Verfahren zum Betrieb eines Ultraschalldurchflussmessgeräts und das entsprechende Ultraschalldurchflussmessgerät auszugestalten und weiterzubilden. Dazu wird verwiesen, einerseits auf die den unabhängigen Patentansprüchen nachgeordneten Patentansprüche, andererseits auf die folgende Beschreibung von Ausführungsbeispielen in Verbindung mit der Zeichnung. In der Zeichnung zeigt

Fig. 1   schematisch ein Verfahren zum Betreiben eines Ultraschalldurchflussmessgeräts und ein Ultraschalldurchflussmessgerät, auf dem das Verfahren betrieben wird, wobei ein Ultraschallsignal mit einer Schallkeule unter einem Öffnungswinkel abgestrahlt wird,

Fig. 2a, 2b   schematisch ein Verfahren zum Betreiben eines Ultraschalldurchflussmessgeräts und ein Ultraschalldurchflussmessgerät zur Illustration des Einflusses einer sich ändernden Schallgeschwindigkeit im Medium,

Fig. 3   schematisch das Verfahren zum Betreiben eines Ultraschalldurchflussmessgeräts und das entsprechende Ultraschalldurchflussmessgerät mit Kompensation einer Änderung des Öffnungswinkels der Schallkeule aufgrund einer sich ändernden Schallgeschwindigkeit im Medium,

Fig. 4   schematisch das Verfahren zum Betreiben eines Ultraschalldurchflussmessgeräts mit Darstellung der Polwinkelabhängigkeit des Schalldrucks im Fernfeld eines zylinderförmigen Ultraschallwandlers,

Fig. 5   schematisch das Verfahren zum Betreiben eines Ultraschalldurchflussmessgeräts mit Darstellung der Abhängigkeit des Öffnungswinkels der Schallkeule eines zylindrischen Ultraschallwandlers in Abhängigkeit von der Schallgeschwindigkeit im Medium und in Abhängigkeit von der Ultraschallsignal-Frequenz und

Fig. 6   schematisch das Verfahren zum Betreiben eines Ultraschalldurchflussmessgeräts gemäß Fig. 5 und eine Strategie zur Än- derung der Ultraschallsignal-Frequenz in Reaktion auf eine sich ändernde Schallgeschwindigkeit im Medium.

In den Figuren sind schematisch verschiedene Aspekte eines Verfahrens 1 zum Betreiben eines Ultraschalldurchflussmessgeräts 2 zur Messung des Durchflusses durch ein von einem Medium 3 durchströmtes Messrohr 4 gezeigt.

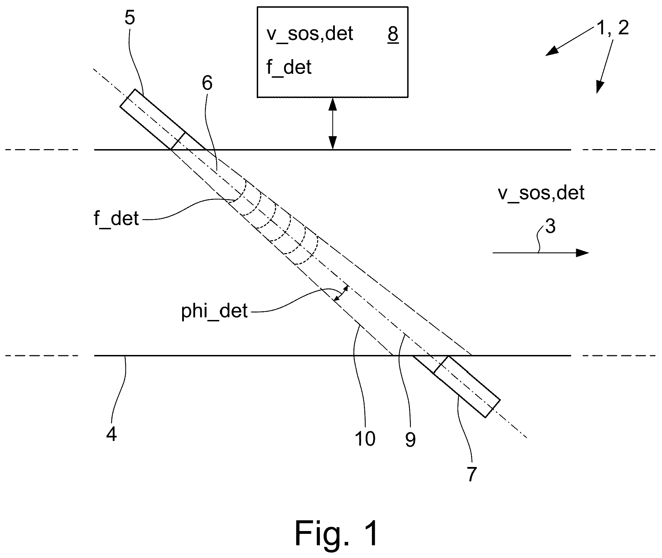

Fig. 1 zeigt das im Betrieb befindliche Ultraschalldurchflussmessgerät 2, auf dem das Verfahren 1 betrieben wird. Das Ultraschalldurchflussmessgerät 2 umfasst einen sendenden Ultraschallwandler 5 zum Senden von Ultraschallsignalen 6 und einen empfangenden Ultraschallwandler 7 zum Empfangen der Ultraschallsignale 6. Ferner umfasst das Ultraschalldurchflussmessgerät 2 auch eine Steuer- und Auswerteeinheit 8. Die Ultraschallwandler 5, 7 sind so angeordnet, dass sie in dem Medium 3 einen Ultraschallmesspfad 9 realisieren. Die Steuer- und Auswerteeinheit 8 steuert den sendenden Ultraschallwandler 5 so an, dass dieser das Ultraschallsignal 6 emittiert, der empfangende Ultraschallwandler 7 empfängt das emittierte Ultraschallsignal 6 und die Steuer- und Auswerteeinheit 8 ermittelt durch Auswertung emittierter und empfangener Ultraschallsignale 6 einen Wert für den Durchfluss des Mediums 3 durch das Messrohr 4.

Im dargestellten Ausführungsbeispiel setzt die Steuer- und Auswerteeinheit 8 eine Laufzeitdifferenzmessung um, es werden also die Signallaufzeiten des Ultraschallsignals 6 in Strömungsrichtung und entgegen der Strömungsrichtung gemessen und daraus eine Strömungsgeschwindigkeit ermittelt, die einen Rückschluss auf den Volumendurchsatz des Mediums 3 gestattet. In Fig. 1 ist gezeigt, dass das Ultraschallsignal 6 in Strömungsrichtung, also von links nach rechts, von dem sendenden Ultraschallwandler 5 emittiert wird. Aufgrund der Laufzeitdifferenzmessung können die Ultraschallwandler 5, 7 aber auch abwechselnd als sendender Ultraschallwandler 5 und empfangender Ultraschallwandler 7 agieren. Der Doppelpfeil zwischen der Steuer- und Auswerteeinheit 8 deutet an, dass die Steuer- und Auswerteeinheit 8 in Wirkzusammenhang mit den anderen Komponenten des Ultraschalldurchflussmessgeräts 2 steht, insbesondere mit dessen Ultraschallwandlern 5, 7 zwecks Durchführung der Durchflussmessung.

Bei dem Ultraschalldurchflussmessgerät gemäß Fig. 1 wird der sendende Ultraschallwandler 5 von der Steuer- und Auswerteeinheit 8 so angesteuert, dass der Ultraschallwandler 5 Ultraschallsignale 6 mit einer definierten Ultraschallsignal-Frequenz f_det emittiert. Wenn das Medium 3 einen definierten Wert der Schallgeschwindigkeit v_sos,det des in dem Messrohr 4 strömenden Mediums 3 aufweist, dann wird das Ultraschallsignal 6 mit einem definierten Öffnungswinkel einer Schallkeule 10 des Ultraschallsignals 6 emittiert. Bei den genannten definierten Werten handelt es sich um die Werte, die der Werkskalibrierung des Ultraschalldurchflussmessgeräts 2 zugrunde liegen.

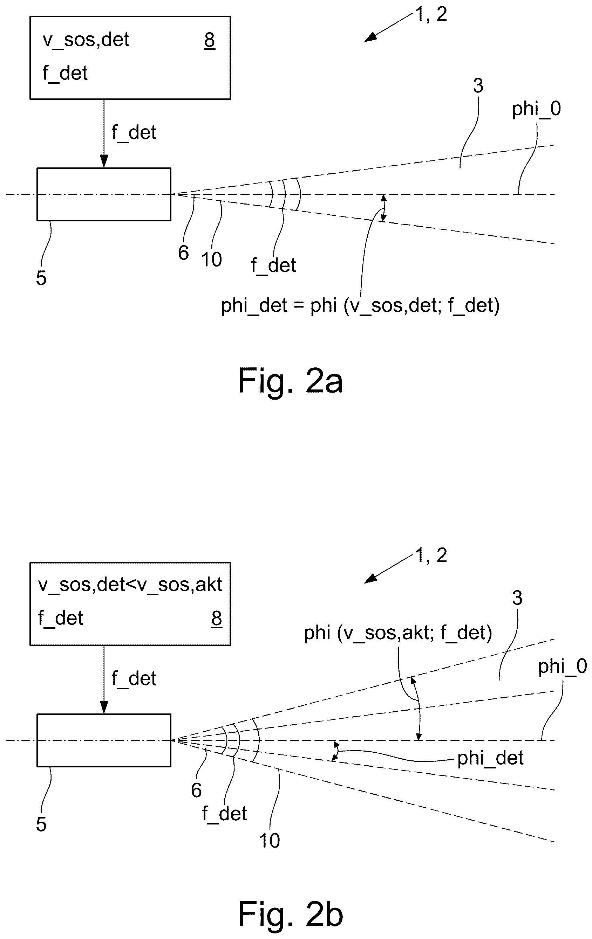

Im Zusammenhang mit der Durchflussmessung von gasförmigen Medien 3 ist erkannt worden, dass sehr unterschiedlich schwere Gase, deren Gasmoleküle sehr unterschiedlich große molare Massen aufweisen, einen erheblichen Einfluss haben auf die Schallgeschwindigkeit in dem Medium 3 und damit auch auf den Öffnungswinkel phi der Schallkeule 10, mit der die Ultraschallsignale 6 in das Medium 3 emittiert werden; dies ist ausführlicher in Fig. 2 dargestellt.

Fig. 2a zeigt die Verhältnisse bei der Durchflussmessung, wenn die definierten Werte für die Ultraschallsignal-Frequenz f_det sowie für die Schallgeschwindigkeit v_sos,det in dem das Messrohr 4 durchströmenden Medium 3 vorliegen. Unter diesen Gegebenheiten wird das Ultraschallsignal 6 mit einer Ultraschallkeule 10 mit dem definierten Öffnungswinkel phi_det abgestrahlt. Der Öffnungswinkel phi der Schallkeule 10 hängt von der Schallgeschwindigkeit v_sos in dem Medium 3 ab, die hier voraussetzungsgemäß dem definierten Wert v_sos,det der Schallgeschwindigkeit entspricht, und der Ultraschallsignal-Frequenz f, die hier voraussetzungsgemäß der definierten Ultraschallsignal-Frequenz f_det entspricht. Es gilt demnach der Zusammenhang: phi_det = phi(v_sos,det; f_det).

In Fig. 2b ist dargestellt, dass sich das Medium 3 insoweit geändert hat, als dass es eine aktuelle Schallgeschwindigkeit v_sos,akt aufweist, die sich von dem definierten Wert v_sos,det der Schallgeschwindigkeit des Mediums 3 unterscheidet, die Schallgeschwindigkeit v_sos,akt ist größer als der definierte Wert v_sos,det der Schallgeschwindigkeit. Unter Beibehaltung der definierten Ultraschallsignal-Frequenz bei dem Wert f_det vergrößert sich die der Öffnungswinkel phi(v_sos,akt; f_det) der Schallkeule 10, mit der das Ultraschallsignal 6 in des Medium 3 abgestrahlt wird gegenüber dem Öffnungswinkel phi_det. Dies kann unerwünschte Effekte auf die Messgüte haben, da das Signal-/Rauschverhältnis abnimmt und gegenseitige Störungen von mehreren benachbarten Ultraschallwandlerpaaren auftreten (nicht dargestellt), die benachbart zueinander angeordnet sind und mehrere Messpfade definieren.

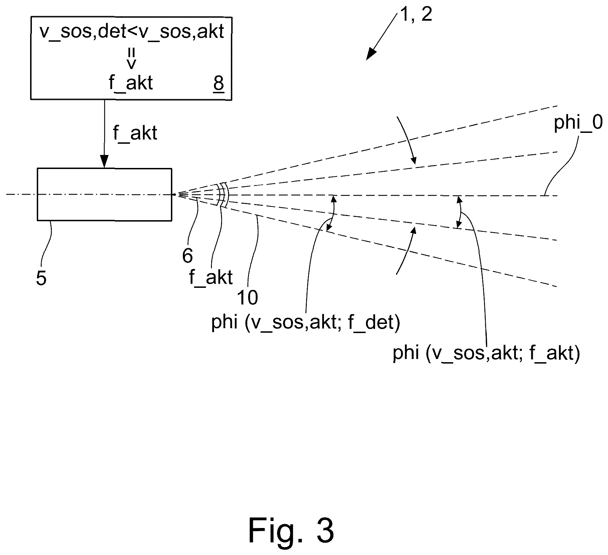

Fig. 3 zeigt das Verfahren 1 und das Ultraschalldurchflussmessgerät 2, bei denen eine Gegenmaßnahme ergriffen wird zwecks Kompensierung des durch die geänderte Schallgeschwindigkeit v_sos,akt verursachten vergrößerten Öffnungswinkels phi. Die Steuer- und Auswerteeinheit 8 erhält den aktuellen Wert v_sos,akt für die Schallgeschwindigkeit des in dem Messrohr 4 strömenden Mediums 3, und die Steuer- und Auswerteeinheit 8 ändert bei der vorliegenden Änderung des erhaltenen aktuellen Wertes v_sos,akt der Schallgeschwindigkeit gegenüber dem definierten Wert v_sos,det der Schallgeschwindigkeit des Mediums 3 die Ultraschallsignal-Frequenz f des emittierten Ultraschallsignals 6 auf einen aktuellen Wert f_akt der Ultraschallsignal-Frequenz, sodass eine durch die Änderung des Wertes der Schallgeschwindigkeit des Mediums 3 bewirkte Änderung des Öffnungswinkels phi der Schallkeule 10 des Ultraschallsignals 6 zumindest teilweise kompensiert wird. Der Öffnungswinkel phi ändert sich durch die Maßnahme auf den wieder reduzierten Öffnungswinkel phi(v_sos,akt; f_akt).

Bei dem dargestellten Verfahren 1 wird die erforderliche Änderung des Wertes der Ultraschallsignal-Frequenz f auf den aktuellen Wert f_akt der Ultraschallsignal-Frequenz f zur Kompensierung des Einflusses der Änderung der Schallgeschwindigkeit v_sos in dem Medium 3 auf den Öffnungswinkel phi der Schallkeule 10 des Ultraschallsignals 6 auf Grundlage eines physikalisch-mathematischen Modells der Wellenausbreitung berechnet. Grundlage für das Verfahren ist die für ideale Gase geltende Gesetzmäßigkeit, wonach die Schallgeschwindigkeit im gasförmigen Medium 3 sich umgekehrt proportional zur Quadratwurzel der molaren Masse des Gases verhält (neben der Abhängigkeit zur Temperatur):

$$v\_sos = \sqrt{\frac{\gamma R T}{M}}$$

Ferner wird eine Gleichung zur Beschreibung des Fernfeldes des Schalldrucks p eines zylindrischen Ultraschallwandlers 5 in Abhängigkeit von einem Polwinkel phi zu einer Hauptabstrahlrichtung phi_0 des sendenden Ultraschallwandlers 5 als physikalisch-mathematisches Modell der Wellenausbreitung herangezogen:

$$p(r, phi, t) = \frac{j}{2} \rho c U \frac{a}{r} ka \left[ \frac{2 J1(ka \sin(phi))}{ka \sin(phi)} \right] e^{j(wt - kr)}$$

Der Winkel phi hat hier die Bedeutung des in den Figuren angegebenen Winkels phi und er entspricht dem Polwinkel gemessen von der Hauptabstrahlrichtung phi_0 des sendenden Ultraschallwandlers 5. Die Gleichung hat die übliche Form einer akustischen Wellengleichung in Kugelkoordinaten, ausgehend von einer zylindrischen Form des Ultraschallwandlers 5.

Die interessierende Abhängigkeit des Schalldrucks p von dem Polwinkel phi ist allein gegeben durch den Term in eckigen Klammern. J1 ist die Besselfunktion erster Gattung und erster Ordnung, k ist die Wellenzahl und a ist der Radius des zylindrischen Ultraschallwandlers 5.

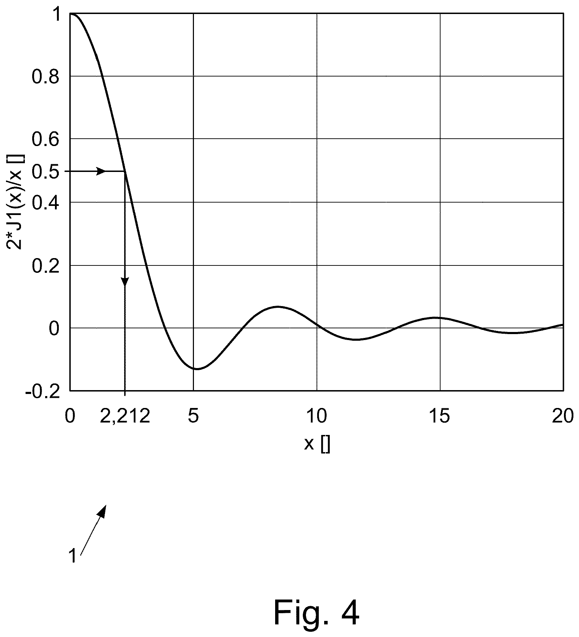

Fig. 4 zeigt den Klammerterm in Abhängigkeit von dem Argument x = k*a*sin(phi). Die Schallkeule wird definiert durch einen Schalldruckabfall von -6 dB gegenüber dem Schalldruck in Hauptabstrahlrichtung phi_0. Diese Dämpfung entspricht bei einer Leistungswurzelgröße wie dem Schalldruck p einem Druckabfall um die Hälfte. Der Wert 0.5 für den Klammerterm wird für x = 2,212 erreicht.

$$Da\ k = 2*pi*f/v\_sos$$

und a = D/2, wobei D der Durchmesser des Ultraschallwandlers ist, gilt:

$$phi = \arcsin\left[\frac{Kd * v\_sos}{D * f}\right]$$

Dabei ist Kd = x/pi = 0,70.

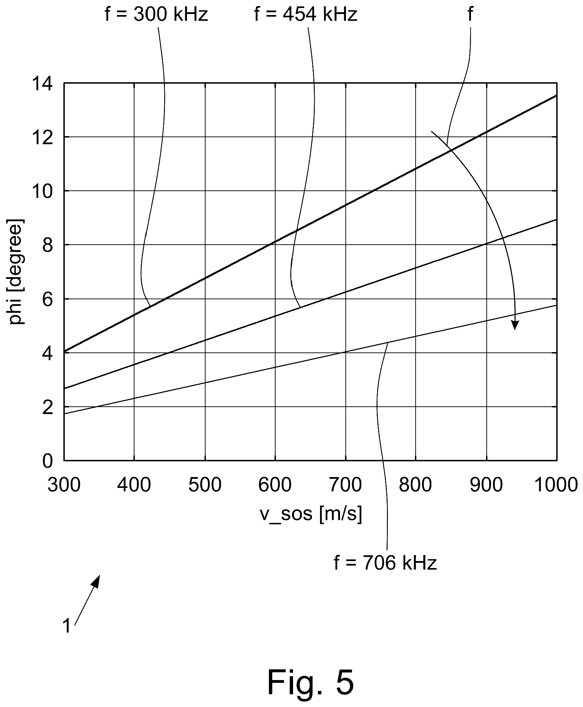

Basierend auf diesem Zusammenhang zeigt Fig. 5 die Abhängigkeit des Öffnungswinkels phi der Schallkeule 10 (definiert durch den Abfall des Schalldrucks um -6 dB) von der Schallgeschwindigkeit v_sos im Medium 3, die ihrerseits abhängt von der molaren Masse M der Gasmoleküle, für einen Ultraschallwandler 5 mit einem Durchmesser von D = 10 mm.

Die drei Kurvenverläufe entsprechen verschiedenen Vorgaben für die Ultraschallsignal-Frequenz f, nämlich für die Werte f= 300 kHz, f= 454 kHz und f = 706 kHz, es sind also Parameterlinien in der Ultraschallsignal-Frequenz f dargestellt. Es ist gut zu erkennen, wie durch Änderung der Ultraschallsignal-Frequenz f Einfluss genommen werden kann auf den Öffnungswinkel phi der Ultraschallkeule 10 des Ultraschallsignals 6. Deshalb ist es möglich, einer durch die Änderung der Schallgeschwindigkeit v_sos des Mediums 3 verursachten Änderung des Öffnungswinkels phi der Schallkeule 10 des Ultraschallsignals 6 durch eine entsprechende Änderung der Ultraschallsignal-Frequenz f des Ultraschallsignals 6 entgegenzuwirken.

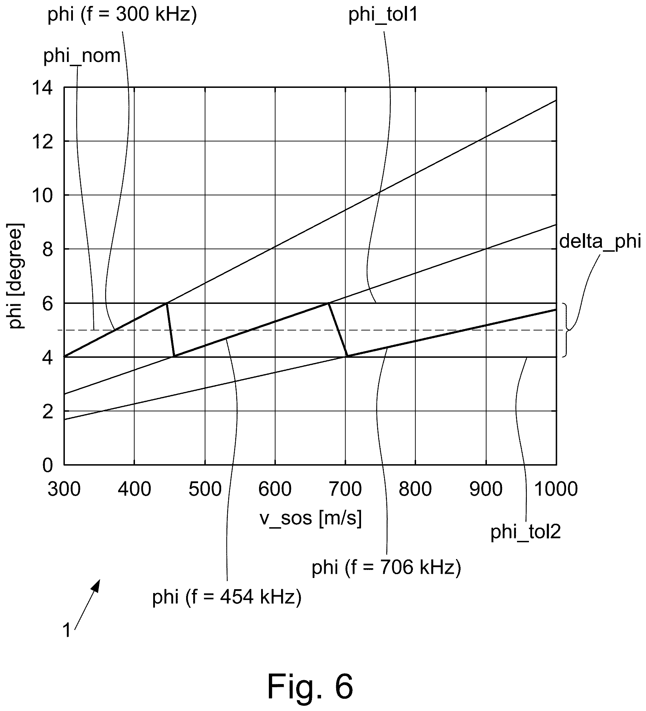

Fig. 6 zeigt ein realisiertes Konzept zur Änderung der Ultraschallsignal-Frequenz f zwecks Kompensierung einer Änderung des Öffnungswinkels phi der Schallkeule 10 des Ultraschallsignals 6. Hier ist realisiert, dass die Ultraschallsignal-Frequenz f des emittierten Ultraschallsignals 6 so geändert wird, dass der Öffnungswinkel phi der Schallkeule 10 des emittierten Ultraschallsignals 6 in einem Toleranzbereich delta_phi um einen nominellen Öffnungswinkel phi_nom von 5° bleibt.

Die Ultraschallsignal-Frequenz f wird sprunghaft auf den geänderten aktuellen Wert f_akt der Ultraschallsignal-Frequenz geändert, wobei durch die Änderung auf den geänderten Wert f_akt der Ultraschallsignal-Frequenz von einer Toleranzgrenze phi_tol1 (6°) des Toleranzbereichs delta_phi zur anderen Toleranzgrenze phi_tol2 (4°) des Toleranzbereichs delta_phi gesprungen wird. Das bedeutet, dass nicht jede Änderung der Schallgeschwindigkeit v_sos des Mediums auch zu einer Änderung der Frequenz des angeregten Ultraschallsignals 6 führt.

Bei alternativen Verfahren 1, die hier nicht gezeigt sind, wird die Ultraschallsignal-Frequenz f kontinuierlich auf den geänderten aktuellen Wert f_akt der Ultraschallsignal-Frequenz f geändert.

Bei dem gezeigten Verfahren 1 und dem gezeigten Ultraschalldurchflussmessgerät 2 wird der aktuelle Wert v_sos,akt für die Schallgeschwindigkeit v_sos des in dem Messrohr 4 strömenden Mediums 3 von der Steuer- und Auswerteeinheit 8 selbst berechnet auf Basis einer Laufzeitmessung des emittierten Ultraschall-Signals 6 und einer bekannten Lauflänge des emittierten Ultraschall-Signals 6.

**Bezugszeichen**

1    Verfahren
2    Ultraschalldurchflussmessgerät
3    Medium
4    Messrohr
5    sendender Ultraschallwandler

6     Ultraschallsignal
7     empfangender Ultraschallwandler
8     Steuer- und Auswerteeinheit
9     Ultraschallmesspfad
10    Schallkeule des Ultraschallsignals

$v\_sos$     Schallgeschwindigkeit des Mediums
$v\_sos,det$     definierter Wert der Schallgeschwindigkeit im Medium
$v\_sos,akt$     aktueller Wert der Schallgeschwindigkeit im Medium
$f$     Ultraschallsignal-Frequenz
$f\_det$     definierte Ultraschallsignal-Frequenz
$f\_akt$     aktuelle Ultraschallsignal-Frequenz
$phi$     Öffnungswinkel der Schallkeule
$phi\_det$     definierter Öffnungswinkel der Schallkeule
$phi\_nom$     nomineller Öffnungswinkel der Schallkeule
$phi\_0$     Hauptabstrahlrichtung
$p$     Schalldruck

**Patentansprüche**

1. Verfahren (1) zum Betreiben eines Ultraschalldurchflussmessgeräts (2) zur Messung des Durchflusses durch ein von einem Medium (3) durchströmtes Messrohr (4), wobei das Ultraschalldurchflussmessgerät (2) wenigstens einen sendenden Ultraschallwandler (5) zum Senden von Ultraschallsignalen (6) und wenigstens einen empfangenden Ultraschallwandler (7) zum Empfangen von Ultraschallsignalen (6) und eine Steuer- und Auswerteeinheit (8) umfasst, wobei die Ultraschallwandler (5, 7) so angeordnet sind, dass sie in dem Medium (3) einen Ultraschallmesspfad (9) realisieren und wobei die Steuer- und Auswerteeinheit (8) den sendenden Ultraschallwandler (5) so ansteuert, dass dieser das Ultraschallsignal (6) emittiert, der empfangende Ultraschallwandler (7) das emittierte Ultraschallsignal (6) empfängt und die Steuer- und Auswerteeinheit (8) durch Auswertung emittierter und empfangener Ultraschallsignale (6) zumindest einen mittelbaren Wert für den Durchfluss des Mediums (3) durch das Messrohr (4) ermittelt, **dadurch gekennzeichnet,**

   **dass** die Steuer- und Auswerteeinheit (8) den sendenden Ultraschallwandler (5) so ansteuert, dass das emittierte Ultraschallsignal (6) mit einer definierten Ultraschallsignal-Frequenz ($f\_det$) emittiert wird, sodass bei einem definierten Wert ($v\_sos,det$) der Schallgeschwindigkeit ($v\_sos$) des in dem Messrohr (4) strömenden Mediums (3) das Ultraschallsignal (6) mit einem definierten Öffnungswinkel ($phi\_det$) einer Schallkeule (10) des Ultraschallsignals (6) emittiert wird,
   **dass** die Steuer- und Auswerteeinheit (8) einen aktuellen Wert ($v\_sos,akt$) für die Schallgeschwindigkeit des in dem Messrohr (4) strömenden Mediums (3) erhält, dass die Steuer- und Auswerteeinheit (8) bei einer Änderung des erhaltenen aktuellen Wertes ($v\_sos,akt$) der Schallgeschwindigkeit ($v\_sos$) gegenüber dem definierten Wert ($v\_sos,det$) der Schallgeschwindigkeit des Mediums (3) die Ultraschallsignal-Frequenz ($f$) des emittierten Ultraschallsignals (6) auf einen aktuellen Wert ($f\_akt$) der Ultraschallsignal-Frequenz ($f$) ändert, sodass eine durch die Änderung des Wertes der Schallgeschwindigkeit ($v\_sos$) des Mediums (3) bewirkte Änderung des Öffnungswinkels ($phi$) der Schallkeule (10) des Ultraschallsignals (6) zumindest teilweise kompensiert wird.

2. Verfahren (1) nach Anspruch 1, **dadurch gekennzeichnet, dass** die Ultraschallsignal-Frequenz ($f$) des emittierten Ultraschallsignals (6) so geändert wird, dass der Öffnungswinkel ($phi$) der Schallkeule (10) des emittierten Ultraschallsignals (6) in einem Toleranzbereich ($delta\_phi$) um einen nominellen Öffnungswinkel ($phi\_nom$) bleibt.

3. Verfahren (1) nach Anspruch 1 oder 2, **dadurch gekennzeichnet, dass** die Ultraschallsignal-Frequenz ($f$) sprunghaft in einem Frequenzsprung auf den geänderten aktuellen Wert ($f\_akt$) der Ultraschallsignal-Frequenz geändert wird, insbesondere wobei durch die Änderung auf den geänderten Wert ($f\_akt$) der Ultraschallsignal-Frequenz von einer Toleranzgrenze ($phi\_tol1$) des Toleranzbereichs ($delta\_phi$) zur anderen Toleranzgrenze ($phi\_tol2$) des Toleranzbereichs ($delta\_phi$) gesprungen wird.

4. Verfahren (1) nach Anspruch 1 oder 2, **dadurch gekennzeichnet, dass** die Ultraschallsignal-Frequenz ($f$) kontinuierlich auf den geänderten aktuellen Wert ($f\_akt$) der Ultraschallsignal-Frequenz ($f$) geändert wird.

5. Verfahren (1) nach einem der Ansprüche 1 bis 4, **dadurch gekennzeichnet, dass** die Ultraschallsignal-Frequenz ($f$)

des emittierten Ultraschallsignals (6) erst geändert wird, wenn die Änderung der erhaltenen Schallgeschwindigkeit (f_akt) gegenüber der definierten Schallgeschwindigkeit (f_det) des Mediums (3) einen vorgegebenen Änderungsschwellwert übersteigt.

6. Verfahren (1) nach einem der Ansprüche 1 bis 5, **dadurch gekennzeichnet, dass** der aktuelle Wert (v_sos,akt) für die Schallgeschwindigkeit (v_sos) des in dem Messrohr (4) strömenden Mediums (3) von der Steuer- und Auswerteeinheit (8) selbst berechnet wird auf Basis einer Laufzeitmessung des emittierten Ultraschall-Signals (6) und einer bekannten Lauflänge des emittierten Ultraschall-Signals (6).

7. Verfahren (1) nach einem der Ansprüche 1 bis 5, **dadurch gekennzeichnet, dass** der aktuelle Wert (v_sos,akt) für die Schallgeschwindigkeit (v_sos) des in dem Messrohr (4) strömenden Mediums (3) vorgegeben wird, insbesondere durch eine externe Parametereingabe.

8. Verfahren (1) nach einem der Ansprüche 1 bis 5, **dadurch gekennzeichnet, dass** die erforderliche Änderung des Wertes der Ultraschallsignal-Frequenz (f) auf den aktuellen Wert (f_akt) der Ultraschallsignal-Frequenz (f) zur Kompensierung des Einflusses der Änderung der Schallgeschwindigkeit (v_sos) in dem Medium (3) auf den Öffnungswinkel (phi) der Schallkeule (10) des Ultraschallsignals (6) auf Grundlage eines physikalisch-mathematischen Modells der Wellenausbreitung berechnet wird, insbesondere durch Verwendung einer Gleichung zur Beschreibung des Schalldrucks (p) in Abhängigkeit von einem Polwinkel (phi) zu einer Hauptabstrahlrichtung (phi_0) des sendenden Ultraschallwandlers (5).

9. Ultraschalldurchflussmessgerät (2) zur Messung des Durchflusses durch ein von einem Medium (3) durchströmten Messrohrs (4), mit wenigstens einem sendenden Ultraschallwandler (5) zum Senden von Ultraschallsignalen (6) und einem empfangenden Ultraschallwandler (7) zum Empfangen von Ultraschallsignalen (6), wobei die Ultraschallwandler (5, 7) so angeordnet sind, dass sie in dem Medium (3) einen Ultraschallmesspfad (9) realisieren und wobei die Steuer- und Auswerteeinheit (8) den sendenden Ultraschallwandler (5) so ansteuert, dass dieser ein Ultraschallsignal (6) emittiert, der empfangende Ultraschallwandler (7) das emittierte Ultraschallsignal (6) empfängt und die Steuer- und Auswerteeinheit (8) durch Auswertung emittierter Ultraschallsignale (6) und empfangener Ultraschallsignale (6) zumindest einen mittelbaren Wert für den Durchfluss des Mediums (3) durch das Messrohr (4) ermittelt, **dadurch gekennzeichnet,**

   **dass** die Steuer- und Auswerteeinheit (8) im Betrieb des Ultraschalldurchflussmessgeräts (2) den sendenden Ultraschallwandler (5) so ansteuert, dass das emittierte Ultraschallsignal (6) mit einer definierten Ultraschallsignal-Frequenz (f_det) emittiert wird, sodass bei einem definierten Wert (v_sos,det) der Schallgeschwindigkeit (v_sos) des in dem Messrohr (4) strömenden Mediums (3) das Ultraschallsignal (6) mit einem definierten Öffnungswinkel (phi_det) einer Schallkeule (10) des Ultraschallsignals (6) emittiert wird, **dass** die Steuer- und Auswerteeinheit (8) einen aktuellen Wert (v_sos,akt) für die Schallgeschwindigkeit (v_sos) des in dem Messrohr (4) strömenden Mediums (3) erhält, dass die Steuer- und Auswerteeinheit (8) bei einer Änderung des erhaltenen aktuellen Wertes (v_sos,akt) der Schallgeschwindigkeit (v_sos) gegenüber dem definierten Wert (v_sos,det) der Schallgeschwindigkeit (v_sos) des Mediums (3) die Ultraschallsignal-Frequenz (f) des emittierten Ultraschallsignals (6) auf einen aktuellen Wert (f_akt) der Ultraschallsignal-Frequenz (f) ändert, sodass eine durch die Änderung des Wertes der Schallgeschwindigkeit (v_sos) des Mediums (3) bewirkte Änderung des Öffnungswinkels (phi) der Schallkeule (10) des Ultraschallsignals (6) zumindest teilweise kompensiert wird.

10. Ultraschalldurchflussmessgerät (2) nach Anspruch 9, **dadurch gekennzeichnet, dass** die Steuer- und Auswerteeinheit (8) im Betrieb des Ultraschalldurchflussmessgeräts (2) das Verfahren (1) gemäß dem Kennzeichnungsteil wenigstens eines Anspruchs der Ansprüche 2 bis 8 ausführt.

Fig. 1

v_sos,det      <u>8</u>

f_det

f_det

3

phi_0

6   10

f_det

$phi\_det = phi\ (v\_sos,det;\ f\_det)$

5

# Fig. 2a

1, 2

v_sos,det<v_sos,akt

f_det      <u>8</u>

f_det

$phi\ (v\_sos,akt;\ f\_det)$

3

phi_0

phi_det

6

f_det

10

5

1, 2

# Fig. 2b

v_sos,det<v_sos,akt

$\|$

v

f_akt     8

f_akt

1, 2

phi_0

5

6

f_akt

10

phi (v_sos,akt; f_det)

phi (v_sos,akt; f_akt)

# Fig. 3

Fig. 4

Fig. 5

phi (f = 300 kHz)    phi_tol1

phi_nom

phi [degree]

14

12

10

8

6

4

2

0

300   400   500   600   700   800   900   1000

v_sos [m/s]

delta_phi

phi_tol2

phi (f = 706 kHz)

phi (f = 454 kHz)

1

## Fig. 6

**EUROPÄISCHER RECHERCHENBERICHT**

Europäisches Patentamt
European Patent Office
Office européen des brevets

Nummer der Anmeldung

EP 25 21 2748

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DE 10 2022 104681 A1 (FLOWTEC AG [CH]) 14. September 2023 (2023-09-14) * Abbildung 1 * * Absatz [0030] - Absatz [0032] * ----- | 1-10 | INV. G01F1/66 G01F1/667 |
| A | US 8 700 344 B2 (WILSON MICHAEL A [US]; NEPTUNE TECHNOLOGY GROUP INC [US]) 15. April 2014 (2014-04-15) * Spalte 2, Zeile 56 - Spalte 3, Zeile 2 * ----- | 1-10 | |
| A | US 2022/018695 A1 (HUANG YUFENG [US] ET AL) 20. Januar 2022 (2022-01-20) * Absatz [0038] * ----- | 1-10 | |
| A | EP 2 103 911 A1 (SICK ENGINEERING GMBH [DE]) 23. September 2009 (2009-09-23) * Abbildung 1 * ----- | 1-10 | |
| A | DE 10 2009 045620 A1 (BOSCH GMBH ROBERT [DE]) 19. Mai 2011 (2011-05-19) * Abbildungen 3A-3D * ----- | 1-10 | RECHERCHIERTE SACHGEBIETE (IPC) |
| A | EP 3 974 783 B1 (KROHNE MESSTECHNIK GMBH [DE]) 14. Februar 2024 (2024-02-14) * Abbildung 10 * * Absatz [0087] * * Absatz [0093] * ----- | 1-10 | G01F |
| A | DE 101 20 355 A1 (ELSTER GMBH [DE]) 31. Oktober 2002 (2002-10-31) * Abbildung 1 * ----- | 1-10 | |
| A | JP 2014 182004 A (YOKOGAWA ELECTRIC CORP) 29. September 2014 (2014-09-29) * Abbildung 1 * ----- | 1-10 | |

Der vorliegende Recherchenbericht wurde für alle Patentansprüche erstellt

| Recherchenort | Abschlußdatum der Recherche | Prüfer |
|---|---|---|
| Den Haag | 18. Februar 2026 | Régert, Tamás |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...........................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.** EP 25 21 2748

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-02-2026

| Im Recherchenbericht angeführtes Patentdokument | Datum der Veröffentlichung | Mitglied(er) der Patentfamilie | Datum der Veröffentlichung |
|---|---|---|---|
| DE 102022104681 A1 | 14-09-2023 | KEINE | |
| US 8700344 B2 | 15-04-2014 | KEINE | |
| US 2022018695 A1 | 20-01-2022 | CN 113167617 A | 23-07-2021 |
| | | EP 3887769 A1 | 06-10-2021 |
| | | JP 7448536 B2 | 12-03-2024 |
| | | JP 2022511463 A | 31-01-2022 |
| | | US 2022018695 A1 | 20-01-2022 |
| | | WO 2020112950 A1 | 04-06-2020 |
| EP 2103911 A1 | 23-09-2009 | EP 2103911 A1 | 23-09-2009 |
| | | EP 2103912 A1 | 23-09-2009 |
| | | PL 2103912 T3 | 28-02-2017 |
| DE 102009045620 A1 | 19-05-2011 | DE 102009045620 A1 | 19-05-2011 |
| | | EP 2488835 A1 | 22-08-2012 |
| | | JP 5479605 B2 | 23-04-2014 |
| | | JP 2013507623 A | 04-03-2013 |
| | | US 2012285260 A1 | 15-11-2012 |
| | | WO 2011045107 A1 | 21-04-2011 |
| EP 3974783 B1 | 14-02-2024 | CN 114257935 A | 29-03-2022 |
| | | EP 3974783 A1 | 30-03-2022 |
| | | US 2022099468 A1 | 31-03-2022 |
| DE 10120355 A1 | 31-10-2002 | KEINE | |
| JP 2014182004 A | 29-09-2014 | KEINE | |

EPO FORM P0461

Für nähere Einzelheiten zu diesem Anhang : siehe Amtsblatt des Europäischen Patentamts, Nr.12/82